# EUROPEAN PATENT SPECIFICATION

(11) **EP 2 358 219 B1**
(45) Date of publication and mention of the grant of the patent: **11.05.2016**
(21) Application number: 09760570.3
(22) Date of filing: 03.11.2009
(51) Int. Cl.: A23L 11/30, A23L 11/00

(54) **SOYA BEAN FOOD PRODUCT AND COMPOSITIONS COMPRISING THEREOF**
SOJABOHNENLEBENSMITTELPRODUKT UND DARAUS BESTEHENDE ZUSAMMENSETZUNGEN
PRODUIT ALIMENTAIRE À BASE DE SOJA ET COMPOSITIONS LE COMPRENANT

(30) Priority: 11.11.2008 HU 0800665
(43) Date of publication of application: 24.08.2011
(73) Proprietor: Fitorex Kft., 1037 Budapest (HU)
(72) Inventor: JEDNÁKOVITS, Andrea, H-2000 Szentendre (HU); SALGÓ, András, H-1025 Budapest (HU); SZILBEREKY, Jenö, H-1015 Budapest (HU); BARLA SZABÓ, Gábor, H-2330 Dunaharaszti (HU); BARLA SZABÓ, Gáborné, H-2330 Dunaharaszti (HU)
(74) Representative: Molnar, Istvan
(86) International application number: PCT/HU2009/000090
(87) International publication number: WO 2010/055360

(56) References cited:
- WO-A1-2005/074710
- WO-A1-2007/052903
- HU-B- 198 377
- KR-A- 20030 093 025
- US-A1- 2003 219 526
- US-B1- 7 022 369
- Fitorex Kft.: "KIEMELKEDÖ MINÖSÉGÜ UJ KONYHAI ALAPANYAG" 25 May 2008 (2008-05-25), XP002568315 Retrieved from the Internet: URL:http://web.archive.org/web/20080525181 549/www.yaso.hu/> [retrieved on 2010-02-11]
- PAZUR J H ET AL: "The metabolism of oligosaccharides in germinating soybeans, Glycine max", ARCHIVES OF BIOCHEMISTRY AND BIOPHYSICS, ACADEMIC PRESS, US, vol. 99, no. 1, 1 October 1962 (1962-10-01), pages 78-85, XP024813094, ISSN: 0003-9861, DOI: 10.1016/0003-9861(62)90246-1 [retrieved on 1962-10-01]
- S Vasantharuba ET AL: "Changes in Vitamin E and Essential Fatty Acid Contents and Their Interrelationship in Soybean (Glycine max L. Merr.) Seeds During Germination and Storage", Tropical Agricultural Research, 1 January 2007 (2007-01-01), pages 119-127, XP055175085, Retrieved from the Internet: URL:http://www.pgia.ac.lk/files/Annual_con gress/journel/v19/14_Changes_in_Vitamin_E_ and_Essential.pdf [retrieved on 2015-03-10]

## Description

The invention relates to soya bean product with improved effect, compositions suitable for human or animal consumption containing thereof, and a method for production of the new soya bean product.

It is well-known that numerous phytogenic protein sources are available in the world, but legumes, particularly soya bean, excel from among these. The special position of soya bean is based on the facts that it has high protein content, and its complete and balanced protein with amino acid pattern has higher biological value as compared with proteins of other plant species.

Because of the above-mentioned characteristics, the oilseed cultivated in the largest amount is the soya bean, which is used versatilely worldwide for nutrition and forage purposes. In addition to the applications in food and forage industries, further industrial use of soya bean (pharmaceutical, cosmetic and domestic chemical industry, biotechnology) is also significant. Nowadays the number of product assortments obtained by most diverse processing of soya bean may be estimated already as high as several hundreds.

Fresh green soya bean, soya bean sprout, soya seed, soya milk, soya bean curd (tofu), oily soya flour, furthermore various protein concentrates and isolates, textured, extruded, granulated products may attract attention among the most prevalent non-fermented soya products and soya foods as well as food ingredients used for eating purpose.

In addition to the favourable compositional characteristics of soya, its functional properties serving technological purposes play a prominent part in the food industry applications of various processed soya products (additive for protein enrichment, pasta, biscuit, production of sponge-biscuit, bakery products, meat analogues, meat products, ice cream substitutes, diabetic foods, infant nutritions, etc.). The emulsibility, the advantageous capability for forming substance and structure, the fat binding and hydrating ability, the thickening characteristic and the like are worthy of note among these.

However, it is well-known from the professional literature as well as experience that nutritional (food industrial) utilization of soya is also hindered by several factors (such as chemical and fimctional properties).

The distinctive bitter flavour of crude soya bean is such an unpleasant property which makes it unpalatable (J. W. G. Porter, B. A. Rolls (1973), Proteins in human nutrition, p. 485, Academic Press, London-New York; Philip S. Chen, Helen D. Chung (1973), Soybean for health and longer life; R. P. Bates, F. W. Knapp, P. E. Arauje (1977), Protein quality of green-mature, dry mature and sprouted soybeans, Journal of Food Science, 42, pp. 271-272). The natural saponin components of soya (sterol glycosides) and their decomposition products are responsible primarily for the formation of bitter flavour.

From dietetics point of view the high stachyose (2-3%), verbascose (0.1-1.5%), raffinose (0.3-1.1%) content of the products to be utilized is another well-known hindrance. Since human digestive system lacking special enzymes (e.g. β-galactosidase) is incapable of utilizing stachyose, colic bacteria start decomposing (fermenting) it. The process entails gas (CO₂, CH₄, H₂) formation (flatulence) thus soya consumption causes flatulent distension, inflation (meteorism) and decrease of appetite. Having known the outcome, this is why significant part of people avoids consuming foods or products containing soya. Several monographs and publications give information about the above issues, from among which the followings are highlighted: H. D. Belitz, W. Grosch (1985), Food Chemistry, Springer Verlag, Berlin; O. R. Fennema (1985), Food Chemistry, Marcel Dekker Inc., NY; W. Baltes (1989), Lebensmittelchemie, Springer Verlag, Berlin.

In addition to the above-mentioned chemical components, a further impediment of wider dietary application of soya is that the various soya products (soya chunks, granules, etc.) require different preparatory steps of cooking technology (wetting, soaking) for the utilization thus extra work and usage of kitchen utensils also spoil the efficiency of the application besides the inconvenience.

No such product or description is known from the professional literature that exhibits any additional advantage regarding eating, nutrition, utilization, and/or describes new advantageous physiological properties, while maintaining all the favourable compositional and fimctional properties of soya.

Some former publications, such as Chen (1973), Soyafoods in the Far East and USA; Products, markets, trends, The first European Soyfoods Workshop (1984 Sept. 21-27), Amsterdam; Kurnik E (1962), A szója, Akadémiai Kiadó, disclose home sprouting method, which has been known for thousands of years, using small amount of soya. The methods, although not being feasible industrially for several reasons, prescribe 4-6 days long sprouting and describe sprouts of 40-50 mm length as end products.

HU 198377 patent discloses a sprouting method, which however provides solution for the industrial implementation as well, supplying the same end product.

WO2007/052903 discloses a soya bean sprouting method and product, where the method comprises the steps of milling soaked or germinated soybeans; micronizing the resulting crude milled soybeans by enzymatic means, mechanical means or a combination thereof; and homogenizing the resulting soybean milk, without producing soybean refuse, providing whole soybean food products containing the entire nutritious components of soybeans. In WO2007/052903 the soaking takes several hours period of time, by which the oxygen-free soaking may cause the deterioration of quality.The basic problem with the methods known up to now is that the time of sprouting is too long (4-6 days). Thus the long technological process is economically disadvantageous even in itself. A further drawback is that the biological process of sprouting progresses considerably, the sprout utilizes much more nutrients (energy) from the seed for its own growing, which means a more significant internal structural and chemical modification of soya bean, and partial consumption of original values of soya.

During the experiments it was our object to form a new food industrial base material which is producible by large-scale production as well, maintains all the valuable components of soya but eliminates completely its above mentioned disadvantageous compositional, eating properties hindering the nutritional and food industrial utilization, simplifies its usage, and furthermore the product has new advantageous physiological properties as well.

Thus the invention is based on the discovery that the above mentioned objects can be achieved by activation of the own enzyme system of soya through its sprouting process lasting for an optimal period or until emergence of at least 5-8 mm long sprouts under the effect of oxygen and water in light or without light at slightly elevated temperature.

In order to ensure the best eating quality, special effort has been made to produce the product using base materials free of genetic modifications (GM-free), specifically suitable for human consumption. The above mentioned natural biological process for transformation of soya is successfully feasible using other arbitrary starting soya bean, i.e. soya base material of various qualities as well.

During the biological process the enzymes originally existing (preformed) and being activated as well as the ones being synthesized *de novo* in the course of sprouting decompose the protein complexes of legumins with high, 335 kD molecular weight (12 subunits), and that of vicillines with smaller, 150 kD molecular weight first into their smaller subunits of 20-37 kD, furthermore they decompose, for example, stachyose (tetrasaccharide) into its monosaccharide components. In the course of sprouting the partial dissolution of components with small molecular weight, primarily that of monosaccharides occurs as well.

According to the above teaching the invention relates to a soya bean product with improved effect with a stachyose content smaller than 7.0 mg/g dry matter a genistein content in the range of 0.2-0.6 mg/g dry matter and vitamin E (tocopherols, tocotrienols) content higher than 3.0 µg/g dry matter.

A preferred soya bean product according to the invention has a stachyose content in the range of 2.0-4.0 mg/g dry matter, a vitamin E content in the range of 3.8-4.0 µg/g dry matter, furthermore a genistein content in the range of 0.2-0.6 mg/g dry matter.

The invention further relates to a composition containing the product with improved effect in an amount of 0.1-100 wt%, being suitable for human or animal consumption.

In a preferred embodiment the composition suitable for consumption contains improved soya product in an amount of 5-50 wt%.

In addition to the above, the invention relates to a method for production of the soya bean product with improved effect, the method comprising the steps recited in claim 6.

The stachyose content of the product produced by the method of the invention is decreased to 2.2-2.3 mg/g dry matter, which is a fraction of the stachyose content of the starting air-dried soya bean (24.0-28.0 mg/g dry matter). This means that the new soya bean product of the invention (hereafter referred to as YASO, which is a known trade name) no longer causes inflation during eating and, contrary to the currently known soya dishes and soya products, an arbitrary amount of it can be consumed within the frame of normal nourishment.

The above outlined short-time enzyme activation and enzymatic hydrolysis processes are already sufficient to eliminate the unpleasant flavour of soya in the course of the technological process and to obtain a product of pleasant, almost neutral flavour effect slightly resembling the flavour of nut.

In the course of our experiments we found that in the product according to the invention the genistein content (an isoflavonoid derivative) of some particular varieties increases up to 2-6 times that of the air-dried soya bean. The genistein content of air-dried soya bean ranges from 0.10 mg/g to 0.14 mg/g dry matter content depending on the variety. Much exceeding this value, the genistein content of the new product of the trade name YASO according to the invention amounts to the levels of 0.2-0.6 mg/g dry matter content. As for vitamin E content of the product, it increases from dry matter level of 1.5-2.0 µg/g or below to above dry matter level of 3.0 µg/g. It is known that isoflavonoids and vitamin E have antioxidant effect, stimulate the immune system and help to maintain the flexibility of blood vessels. Thus it is particularly important in our everyday eating and in public catering to have a new base material that provides a final product which is also guaranteed to have antioxidant, thereby health protecting effect. As compared to soya products known up to now, an additional physiological effect may be achieved consuming them regularly.

The developed new food can also be consumed alone in its form of origin (complete bean), in minced or pulped form. A further culinary advantage of the originated product as compared to the previous soya compositions is that, contrary to them, the utilization of the product requires no preparatory steps of cooking technology. The user can utilize it directly for making the various dishes (for example as substitute for minced meats) according to the usual recipe and method without special kitchen operation, using the otherwise normal methods of making dishes (baking, steaming and others).

For example when using in cooking technologies, the minced product is to be handled as if it were minced meat. In addition to point of view of convenience, this also provides the benefits that there is no need to change the dish recipes and cooking methods, the quality of dishes can be maintained with safety, thereby this also means a more economical utilization as compared to application of previous soya products.

Clean healthy soya seeds free of physical contamination or cleaned by known methods are used for the production of the new food base material according to the invention. The water content of the seeds is increased gradually by spray wash-down applied 3-4 times but not more often than once every hour in order to prevent the sudden swelling of seed-leaves and the resulting seed damages to provide maximum vigor of the seeds. The period between wash-downs is necessary for the intensive hydration of seeds. The pre-wetting (preconditioning) is followed by a relatively short soaking of 1.5-2.5 hours in water of 15-35°C. After removal of soaking water, seeds are sprouted for 48 hours reckoned from the starting first spray wash-down with continous provision of oxygen content of air, during which time the required water content is provided by further spray wash-down applied 4-5 times every 6-8 hours.

In the course of the whole method the oxygen supply of seeds is continuously provided. After 48 hours reckoned from the first wetting or when sprouts of at least 5-8 mm length emerge, the sprouting process is stopped by a thermal, hydrothermal, high frequency or other heat treatment method at 60-100°C for 3-10 minutes or cooling treatment, which are usual in food industry. Subsequently, if required, the product may be cooked until a softness to taste is obtained. Following the heat treatment or cooking, the sprouted seeds are isolated, cooled and dried as long as the water on their surface evaporates then, if required, the seeds are minced or pulped.

If required, the end product obtained by the above method (complete bean, minced or pulped product) is dehydrated gently to an arbitrary degree by usual methods known in food industry then it may be ground to flour of arbitrary particle size.

The new product, the compositions containing thereof and the method according to the invention are demonstrated through the following examples:

### Example 1

### Production of soya product with improved effect

100 kg of healthy complete soya bean of selected variety is provided as starting material, which is free of genetic modifications (GM-free), suitable for human consumption, and cleaned of physical waste and broken seeds, then the seeds are washed down using aqueous solution.

A 2-20 cm thick layer of the seeds is placed on trays that can be easily ventilated and a spray wash down of the beans is performed uniformly with water of 10-30°C temperature three times at intervals of maximum 60 minutes for a period of 20-60 seconds. Then the seeds are soaked in 300 1 water of 20-30°C temperature for 1.5-2.5 hours in such a way that the seeds are covered by water throughout the soaking. After drainage of soaking water, sprayings are repeated at intervals of 6-8 hours 4-5 times using tap-water. The ambient temperature is maintained between 20-30°C throughout the whole sprouting process.

Sprouting is continued with continuous monitoring of the sprouting process until sprouts of 5-8 mm length emerge or for at least 48 hours. Then the seeds are cooked in water at 100°C for 5 minutes in a suitable equipment in order to stop the sprouting process.

Then the cooking water is drained from the seeds, and they are cooled to room temperature and dried as long as the water on their surface evaporates completely. Subsequently, they are minced to a particle size of 2-3 mm and packed into plastic bags suitable for food packaging. The product is stored under cooling at temperature of 0-3°C or it is frozen in a way usual in food industry and stored deep-frozen.

The most important analytical data of the obtained are product are shown below:

**Table 1**

| Comparison of compositional values of the product according to the invention (YASO) and the starting soya | | |
|---|---|---|
| (dry matter) | | |
| Components | Starting soya | Product according to example 1(YASO) |
| Energy components (g/100 g dry matter) Protein | 39-41 | 39 |
| Fat | 20-24 | 23 |
| (ω-3 and ω-6 fatty acid/%/ therefrom) | 48-52 | 55 |
| Carbohydrate | 15-18,5 | 9,3 |
| Ash content | 1,8 | 1,7 |
| Stachyose (mg/g dry matter) | 24-28 | 2,2 |
| Energy content (kJ/100 g dry matter) | 480 | 429 |
| Dietary micro fiber (mg/g dry matter) | 3,9-5,3 | 8 |
| Genistein (mg/g dry matter) | 0,14 | 0,58 |
| Vitamin E (µg/g dry matter) | 1,5-2,0 | 4 |

**Table 2**

| Compositional values of the product according to the invention (YASO) and of various sorts of meats (leg of chicken, pork loin) | | | |
|---|---|---|---|
| (in their form of origin, with water content) | | | |
| Components | Product according to example 1 (YASO) | Leg of chicken | Pork loin |
| Energy components Protein (g/100 g) | 20 | 20,9 | 21 |
| Fat (g/100 g) | 9 | 5,2 | 8,1 |
| (ω-3 and ω-6 fatty acid /%/ therefrom) | 55 | - | - |
| Carbohydrate (g/100 g) | 2,6 | 0,5 | 0,4 |
| Ash content (g/100 g) | 1,7 | 1,4 | 1,0 |
| Energy content (kJ/100 g dry matter) | 429 | 571 | 685 |
| Water content (g/100 g) | 63,2 | 72 | 69,5 |
| Dietary micro fiber (g/100 g) | 10,1 | - | - |
| Genistein (mg/g) | 0,14 | 0,58 | |
| Cholesterol (mg/100 g) | - | 85 | - |

### Example 2

Example 1 is followed in every aspect, except that a continuous moving grate equipment suitable for heat input, heat removal and spraying is used instead of the trays for the sprouting operations prior to the soaking period and subsequently.

### Examples of application:

### Example 3

### General application for making dishes

6-7 kg of minced pork and 3-4 kg of the minced product described in example 1 (hereafter referred to as its trade name, YASO) are mixed. Thus 10 kg of minced pork+YASO ready-for-use mixture can be obtained.

When using 7-8 kg of minced poultry, addition of 2-3 kg of minced YASO is proposed. Thus 10 kg ready-for-use mixture with poultry can be obtained.

Naturally, the above mixtures can be prepared using other sorts of meat. Then the above mixtures are used for making dishes in such a usual way as in case of cooking with 100% meat.

From point of view of cooking technology, YASO can be used in the same way as minced meat, YASO may partly or completely replace it. It does not require proportions deviating from the ordinary, and an unusual and unknown preparation method. Seasoning is proposed to be performed according to personal taste. Meat can be partly, in an arbitrary degree, or completely replaced by the product. Replacement or substitution of meat by YASO makes observable difference neither in appearance nor in taste of dishes when eating them.

Due to its excellent composition and taste, YASO is suitable for production of meatless (vegetarian), cholesterol-free "reform" foods and so-called bio-foods (organic foods) as well.

The most frequent applications are as follows (but not limited to them):
preparation of ragouts (for example ragout bolognese, etc.),
preparation of hash dishes,
all kinds of layered dishes,
"Hortobagy" pancake or other stuffing,
cold dishes (for example deviled egg, etc.),
vegetarian dishes (in this case 100% YASO is used instead of meat).

### Example 4

### YASO-containing "meatloaf"

### Ingredients:

300 g YASO
1 small onion, finely chopped
1 clove of garlic, crushed
100 g grated cheese
200 ml milk
100 g boiled brown rice
1.5 teaspoons relish, 0.5 teaspoons black pepper
1 teaspoon powdered mustard
1 teaspoon red paprika
salt
10 ml freshly chopped herb

The above materials are mixed then the mixture is formed to have a shape of a loaf. Then the surface of the unbaked loaf is lightly oiled and the loaf is placed into a baking dish. It is baked in a pre-heated oven (at 180°C) for 1-1.2 hours.

The obtained product is a delicious "meatloaf".

### Example 5

### YASO-containing muffin

### Ingredients:

200 g YASO
100 g flour
100 g oat flakes
10 g baking powder
100 g brown sugar
100 g margarine or butter
250 ml milk or soya milk
2 eggs
a pinch of salt

### Preparation method is as follows:

Sugar and butter are mixed, and YASO, milk and eggs are added. Then these ingredients are stirred thoroughly again. Flour, oat flakes and baking powder are added subsequently. Then using a pre-heated oven (180°C), muffin is baked in a buttered muffin pan for 10-12 minutes.

### Example 6

### Home-made bread with YASO (medium size)

### Ingredients:

500 ml flour
500 ml YASO
250 ml muesli
15 ml sunflower seeds
5 ml sesame seeds
5 ml salt
5 ml sodium bicarbonate
500 ml soya milk or unflavoured yogurt
15 ml honey
additional sesame seeds to be sprinkled on the top

### Steps of preparation:

1. Oven is pre-heated to 180°C,
2. Ingredients (except honey and yogurt) are mixed and stirred thoroughly,
3. Yogurt and honey are added to the mixture,
4. Dough is placed into a buttered bread pan,
5. Sesame seeds are sprinkled on top of the dough and it is baked for 1 hour.

### Example 7

### Vegetarian paste

### Ingredients:

150 g YASO (in the form of purée)
1 medium size onion, finely chopped
1 tablespoon olive oil
2 tablespoon tomato purée (to taste)
2 tablespoon chopped parsley
a pinch of salt
1 tablespoon lightly roasted sesame seeds

### Steps of preparation:

1. Onion is steamed until it softens,
2. YASO purée is added and mixed with the other ingredients,
3. It is salted to taste,
4. It is left to cool for 30-35 minutes before serving and 2 tablespoon cheese cream is added to the paste immediately before serving

### Example 8

### Production of pasta products

Pasta products are produced by addition of flour, water and egg or egg powder during the steps of intensive stirring, pressing/forming then gentle drying.

The starting wheat flour (of *T. aestivum* or *T. durum*) may be replaced by homogenized YASO product in an amount of 10-20%. The YASO product of about 60% water-content is dispersed in the flour by intensive stirring then by addition of the egg powder (which may amount to 2-8% of the flour) and the necessary amount of water (max 20% of the flour in the mixture) a homogeneous dough is kneaded. The product obtained by pressing is gently dried (T< 40°C) until a water content of maximum 13% is achieved.

The pasta product with added YASO has increased protein content and a more favourable amino acid composition as compared to the pasta based on the original flour.

### Example 9

### Utilization of YASO as additive for meat industry

In the field of meat industry products, YASO may be used as additive primarily in the production of so-called red products (frankfurter sausage, bologna sausage, crinoline sausage, saveloy).

Homogenized YASO is suitable for replacement of meat proteins in an amount of 10-20% in such a way that YASO can be directly used in the so-called cutter mixture.

| | | |
|---|---|---|
| Characteristic data of red products: | water content | ∼65% |
| | protein | ∼13-15% |
| | fat | ∼20% |
| | salt | ∼2.5%. |

Adjustment of composition may be easily provided by addition of YASO, which requires no hydration time contrary to the usual addition of soya protein (which implies application of concentrate or isolate), homogeneity is provided by the cuttering step.

### Example 10

### Cat food with beef (100 g)

### Composition of product:

Water content: 75 g
Beef: 4 g
YASO: 15 g
Crude fat: 6 g

Solid components are chopped finely. Components are mixed then pressed at high temperature for a short period of time.

## Claims

1. A soya bean product with improved effect, wherein the stachyose content is smaller than 7.0 mg/g dry matter, the genistein content is in the range of 0.2-0.6 mg/g dry matter and vitamin E content (tocopherols, tocotrienols) is higher than 3.0 µg/g dry matter.

2. The soya bean product according to Claim 1, wherein the stachyose content is in the range of 2.0-4.0 mg/g dry matter.

3. The soya bean product according to Claims 1 to 2, wherein the vitamin E content is in the range of 3.8-4.0 µg/g dry matter.

4. A composition suitable for human or animal consumption, which contains the product according to Claims 1 to 3 in an amount of 0.1-100 wt%.

5. The composition according to claim 4, which contains the product according to claims 1 to 3 in an amount of 5-50 wt%.

6. A method for the production of the product according to Claims 1 to 3, which comprises the steps of:
a) pre-conditioning the soya been seeds produced in a way known in itself by spray washing a 2-20 cm thick layer of the soya bean seeds with water at 10-30 °C temperature three times at intervals of maximum 60 minutes for a period of 20-60 seconds;
b) continuing the hydration of seeds by soaking in water at 15-35 °C, preferably 20-30 °C temperature for a period of 1.5-2.5 hours;
c) after drainage of soaking water, sprayings are repeated at intervals of 6-8 hours 4-5 times using tap-water;
d) sprouting the seeds until sprouts of 5-8 mm length emerge or for at least 48 hours;
e) then stopping the sprouting process by cooking the seeds in water at 100 °C for 5 minutes;
f) isolating of the sprouted seeds;
g) if required, grinding and/or forming the seeds to achieve a form suitable for food production.

7. A soya bean product with improved effect, which is obtainable by the steps of:
a) pre-conditioning the soya been seeds produced in a way known in itself by spray washing a 2-20 cm thick layer of the soya bean seeds with water at 10-30 °C temperature three times at intervals of maximum 60 minutes for a period of 20-60 seconds;
b) continuing the hydration of seeds by soaking in water at 15-35 °C, preferably 20-30 °C temperature for a period of 1.5-2.5 hours;
c) after drainage of soaking water, sprayings are repeated at intervals of 6-8 hours 4-5 times using tap-water;
d) sprouting the seeds until sprouts of 5-8 mm length emerge or for at least 48 hours;
e) then stopping the sprouting process by cooking the seeds in water at 100 °C for 5 minutes;
f) isolating of the sprouted seeds;
g) if required, grinding and/or forming the seeds to achieve a form suitable for food production.

8. A composition suitable for human or animal consumption, which contains the product according to Claim 7 in an amount of 5-50 wt%.

## Patentansprüche

1. Sojabohnenprodukt mit verbesserter Wirkung, wobei der Gehalt an Stachyose kleiner als 7,0 mg/g trockenes Material, der Gehalt an Genistein im Bereich von 0,2-0,6 mg/g trockenes Material und der Gehalt an Vitamin-E (Tocopherole, Tocotrienole) höher als 3,0 µg/g trockenes Material beträgt.

2. Das Sojabohnenprodukt nach Anspruch 1, wobei der Gehalt an Stachyose im Bereich 2,0-4,0 mg/g trockenes Material liegt.

3. Das Sojabohnenprodukt nach Anspruch 1 oder 2, wobei der Gehalt an Vitamin-E im Bereich von 3,8-4,0 µg/g trockenes Material liegt.

4. Zubereitung für menschlichen oder tierischen Verbrauch, enthaltend das Sojabohnenprodukt nach den Ansprüchen 1 bis 3 in einer Menge von 0,1-100 Gewichts%.

5. Die Zubereitung nach Anspruch 4, welche das Produkt nach den Ansprüchen 1 bis 3 in einer Menge von 5-50 Gewichts% enthält.

6. Verfahren zur Herstellung des Produktes nach den Ansprüchen 1 bis 3, welches die folgenden Schritte enthält:
a) Vorbehandlung der auf übliche Weise gewonnenen Sojabohnen-Samen durch dreimalige Spraywaschung einer 2-20 cm dicken Schicht von Sojabohnen-Samen mit Wasser bei einer Temperatur von 10-30°C in Intervallen von höchstens 60 Minuten und über eine Zeitdauer von 20-60 Sekunden;
b) Fortsetzung der Hydratation der Samen durch Benetzung mit Wasser bei einer Temperatur von 15-35°C, vorzugsweise 20-30°C über eine Zeitdauer von 1,5-2,5 Stunden;
c) nach Entfernung des Benetzungswassers 4-5-maliges Wiederholen der Spraywaschung mit Leitungswasser in Intervallen von 6-8 Stunden für 4-5-mal;
d) Keimung der Samen bis zur Emergenz von Keimlingen mit einer Höhe von 5-8 mm oder mindestens 48 Stunden lang;
e) dann Beendigung des Keimungsvorganges durch Kochen der Samen in Wasser bei einer Temperatur von 100°C über eine Zeitdauer von 5 Minuten;
f) Isolierung der gekeimten Samen;
g) gewünschtenfalls Mahlen und/oder Formgebung der Samen zur Erreichung einer zur Nahrungsmittelherstellung geeigneten Formation.

7. Sojabohnenprodukt mit verbesserter Wirkung, durch ein Verfahren, welches die folgenden Schritte enthält:
a) Vorbehandlung der auf übliche Weise gewonnenen Sojabohnen-Samen durch dreimalige Spraywaschung einer 2-20 cm dicken Schicht von Sojabohnen-Samen mit Wasser bei einer Temperatur von 10-30°C in Intervallen von höchstens 60 Minuten und über eine Zeitdauer von 20-60 Sekunden;
b) Fortsetzung der Hydratation der Samen durch Benetzung mit Wasser bei einer Temperatur von 15-35°C, vorzugsweise 20-30°C über eine Zeitdauer von 1,5-2,5 Stunden;
c) nach Entfernung des Benetzungswassers 4-5-maliges Wiederholen der Spraywaschung mit Leitungswasser in Intervallen von 6-8 Stunden für 4-5-mal;
d) Keimung der Samen bis zur Emergenz von Keimlingen mit einer Höhe von 5-8 mm oder mindestens 48 Stunden lang;
e) dann Beendigung des Keimungsvorganges durch Kochen der Samen in Wasser bei einer Temperatur von 100°C über eine Zeitdauer von 5 Minuten;
f) Isolierung der gekeimten Samen;
g) gewünschtenfalls Mahlen und/oder Formgebung der Samen zur Erreichung einer zur Nahrungsmittelherstellung geeigneten Formation.

8. Zubereitung für menschlichen oder tierischen Verbrauch, enthaltend das Produkt nach Anspruch 7 in einer Menge von 5-50 Gewichts%.

## Revendications

1. Produit de soja avec un effet amélioré, dans lequel la teneur en stachyose est inférieure à 7,0 mg/g de matière sèche, la teneur en genistein est dans la gamme de 0,2 à 0,6 mg/g de matière sèche, et la teneur en vitamine E (tocophérols, tocotriénols) est supérieure à 3,0 µg/g de matière sèche.

2. Le produit de soja selon la revendication 1, dans lequel la teneur en stachyose est dans la gamme de 2,0 à 4,0 mg/g de matière sèche.

3. Le produit de soja selon les revendications 1 ou 2, dans lequel la teneur en vitamine E est dans la gamme de 3,8 à 4,0 µg/g de matière sèche.

4. Composition convenant à la consommation humaine ou animale, contenant le produit selon les revendications 1 à 3 dans une proportion de 0,1 à 100 % en poids.

5. La composition selon la revendication 4, contenant le produit selon les revendications 1 à 3 dans une proportion de 5 à 50 % en poids.

6. Procédé pour la préparation du produit selon les revendications 1 à 3, comprenant les étapes de :
a) conditionnement préalable des graines de soja selon un procédé connu en soi en lavant par pulvérisation une couche des graines de soja d'une épaisseur de 2 à 20 cm avec de l'eau à une température de 10 à 30°C trois fois avec des intervalles de 60 minutes au plus pendant une période de 20 à 60 secondes ;
b) continuer l'hydratation des graines par trempage dans de l'eau à une température de 15 à 35°C, préférablement à une température de 20 à 30°C pendant une période de 1,5 à 2,5 heures ;
c) après le drainage de l'eau de trempage, des pulvérisations sont répétées avec des intervalles de 6 à 8 heures 4 à 5 fois en utilisant de l'eau de robinet ;
d) faire germer les graines jusqu'à des jeunes pousses de longueur de 5 à 8 mm émergent ou pendant au moins 48 heures ;
e) ensuite arrêter le processus de germination par faire cuire les graines dans de l'eau à 100°C pendant 5 minutes ;
f) isoler les graines germées ;
g) si nécessaire, moudre et/ou former les grains pour atteindre une forme appropriée pour la production d'un aliment.

7. Produit de soja avec un effet amélioré, pouvant être obtenu par les étapes de :
a) conditionnement préalable des graines de soja selon un procédé connu en soi en lavant par pulvérisation une couche des graines de soja d'une épaisseur de 2 à 20 cm avec de l'eau à une température de 10 à 30°C trois fois avec des intervalles de 60 minutes au plus pendant une période de 20 à 60 secondes ;
b) continuer l'hydratation des graines par trempage dans de l'eau à une température de 15 à 35°C, préférablement à une température de 20 à 30°C pendant une période de 1,5 à 2,5 heures ;
c) après le drainage de l'eau de trempage, des pulvérisations sont répétées avec des intervalles de 6 à 8 heures 4 à 5 fois en utilisant de l'eau de robinet ;
d) faire germer les graines jusqu'à des jeunes pousses de longueur de 5 à 8 mm émergent ou pendant au moins 48 heures ;
e) ensuite arrêter le processus de germination par faire cuire les graines dans de l'eau à 100°C pendant 5 minutes ;
f) isoler les graines germées ;
g) si nécessaire, moudre et/ou former les grains pour atteindre une forme appropriée pour la production d'un aliment.

8. Composition convenant à la consommation humaine ou animale, contenant le produit selon la revendication 7 dans une proportion de 5 à 50 % en poids.
